# DEMANDE DE BREVET EUROPEEN

(11) **EP 0 680 791 A1**
(43) Date de publication de la demande: **08.11.1995**
(21) Numéro de dépôt: 95400457.8
(22) Date de dépôt: 03.03.1995
(51) Int. Cl.: B09B 3/00, C05F 3/06

(54) **Dispositif pour l'épandage et le malaxage de produits**

(30) Priorité: 11.03.1994 FR 9402823
(71) Demandeur: LELY FRANCE, F-61000 Alencon (FR)
(72) Inventeur: Charles, Stéphane, F-72000 Le Mans (FR)
(74) Mandataire: Loyer, Bertrand

(57) **Abrégé**

Dispositif pour l'incorporation de chaux vive dans une masse de produits hydrocarbonés, caractérisé par le fait que d'une part une fosse rectangulaire (1) dans laquelle est déposée la masse de produit hydrocarboné à traiter et d'autre part par un outil mobile (3), circulant au-dessus de ladite fosse, ledit outil étant constitué par la combinaison d'un outil rotatif (8) et d'un outil de distribution (10, 11).

## Description

La présente invention concerne un dispositif pour l'épandage et le malaxage de produits.

Dans le brevet européen EP 0 306 430 au nom de Monsieur MOULINEC, on a décrit un procédé de traitement de déchets hydrocarbonés consistant à épandre sur une aire étanche une certaine épaisseur de produits hydrocarbonés; puis à épandre par dessus de l'oxyde de calcium anhydre (chaux vive) en granulats ; puis à malaxer le tout afin d'obtenir un mélange intime ce qui provoque une réaction exothermique au terme de laquelle le produit hydrocarboné est transformé en un produit hydrophobe non polluant.

Ce procédé a, entre autres choses, été mis en oeuvre pour le traitement des déchets d'élevage de volaille afin d'obtenir un produit hydrophobe non polluant, peu organique, conforme aux normes en vigueur pour la mise en décharge, ne risquant pas de libérer des nitrates par fort ruissellement d'eau.

Pour mettre en oeuvre ce procédé, on a épandu sur une aire bétonnée une couche d'environ 40 cm d'épaisseur de fientes de volailles au moyen d'un godet chargeur frontal monté à l'avant d'un tracteur; puis à l'aide d'un outil rotatif de travail du sol du genre houe rotative attelé à l'arrière du même tracteur, on a homogénéisé cette couche; ensuite à l'aide du même chargeur frontal on a épandu une couche de quelques centimètres de chaux vive en granulats ; ensuite on a procédé à un malaxage au moyen de la houe rotative et après quelques heures, on a ramassé le produit sec, hydrophobe avec le chargeur frontal.

Cette façon de mettre en oeuvre le procédé du brevet EP 0 306 430 a donné de mauvais résultats, essentiellement parce qu'avec un godet de chargeur frontal, il est pratiquement impossible d'obtenir un dosage régulier et précis soit du produit à traiter soit de la chaux vive et également parce que dès que la réaction est amorcée, la température monte de façon telle que les pneumatiques du tracteur sont gravement endommagés sinon détruits pendant l'opération de malaxage.

La présente invention a pour objet d'éliminer ces inconvénients.

Elle se caractérise d'une part par l'emploi d'une fosse étanche rectangulaire dont au moins un des côtés est muni de moyens permettant le roulement d'une machine ou d'un tracteur et d'autre part par la combinaison d'un outil rotatif et d'un outil de distribution muni de moyens de contrôle de l'écoulement du produit qu'il épand.

L'outil rotatif peut être une herse rotatif.

L'organe d'épandage peut être un appareil analogue à un épandeur d'engrais.

A titre d'exemple non limitatif, on a représenté aux dessins annexés :
Figure 1, une vue schématique en élévation latérale d'un mode de réalisation de l'invention;
Figure 2, une vue en plan du dispositif de la figure 1;
Figures 3a à 3d quatre vues illustrant quatre modes de réalisation de la fosse.
Figure 4, une vue schématique en élévation latérale d'un deuxième mode de réalisation de l'invention.

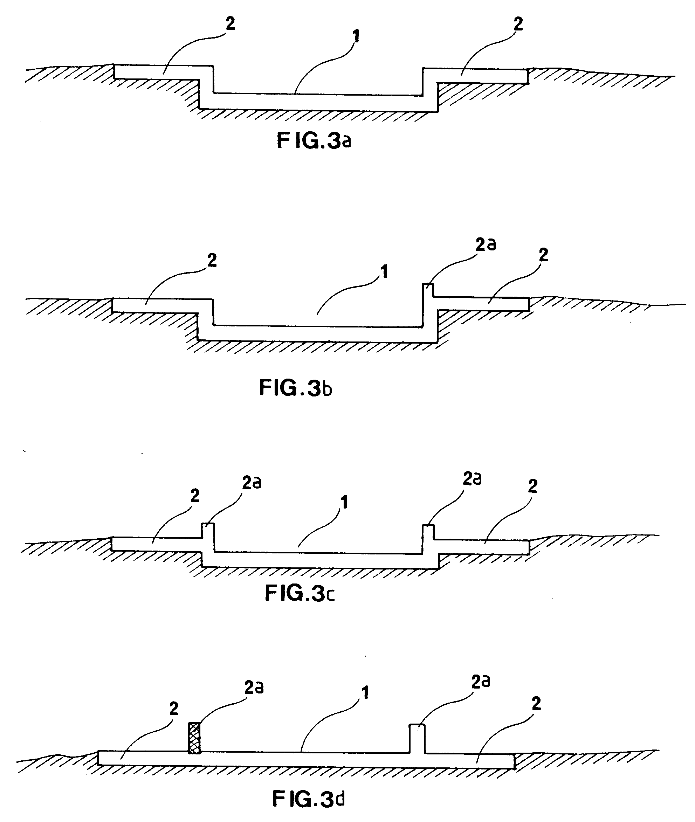

En se reportant à ces figures, on voit que l'invention comporte une fosse étanche 1 qui est rectangulaire, sa largeur étant de préférence légèrement inférieure à la voie d'un tracteur (ou autre moyen de traction) et sa longueur étant comprise entre 10 et 30 mètres. Cette fosse est munie le long d'au moins un de ses grands côtés d'une surface de roulement 2. De préférence, comme cela est représenté aux figures 3a à 3d, on dispose une surface de roulement 2 le long des deux côtés. Le tracteur (ou autre moyen de traction peut alors circuler sur les surfaces de roulement 2 en enjambant la fosse 1).

Le tracteur (non représenté) remorque un véhicule désigné par la référence générale 3.

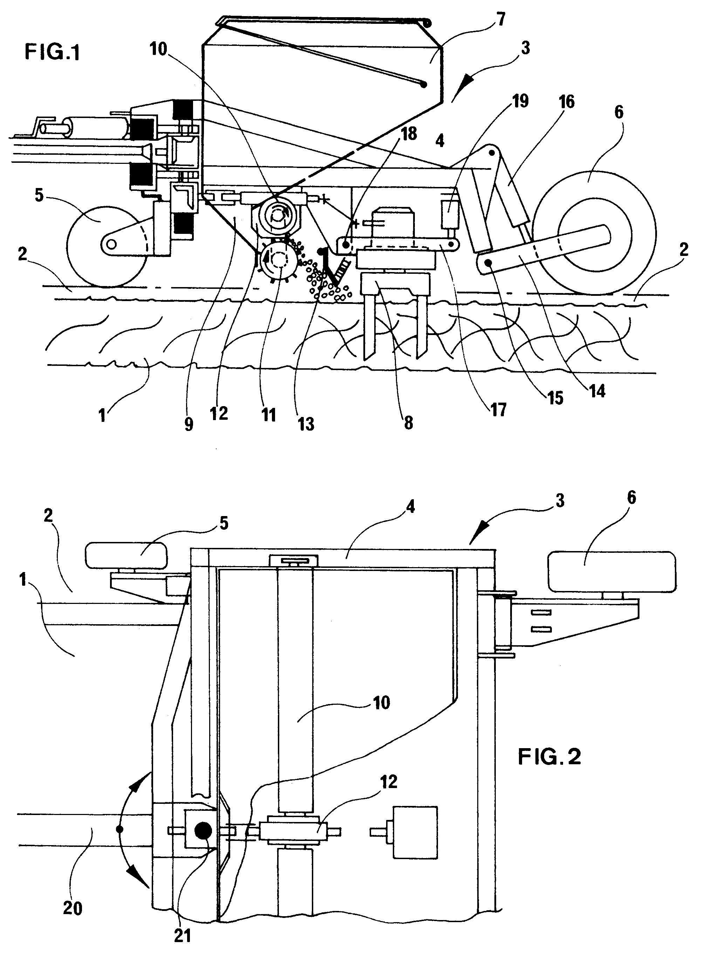

Selon un premier mode de réalisation représenté aux figures 1 et 2, ce véhicule est constitué par un châssis 4 porté à l'avant par une paire de roues 5 et à l'arrière par une paire de roues 6. Les roues 5 et 6 roulent sur les surfaces de roulement 2 de sorte que le châssis 4 enjambe la fosse 1.

Le châssis 4 porte un organe épandeur 7 et un outil rotatif 8, qui, dans l'exemple représenté est une herse rotative.

L'organe épandeur comporte une trémie munie à sa base d'une ouverture 9 qui s'étend sur une largeur sensiblement égale à celle de la fosse 1.

Cette ouverture 9 est obturée par deux rouleaux contrarotatifs 10 et 11, disposés l'un au-dessus de l'autre. Ces rouleaux sont entraînés par la prise de force du tracteur par l'intermédiaire d'une transmission 12, analogue à une boîte de vitesse.

Lorsque les rouleaux 10 et 11 tournent, ils avalent en quelque sorte le produit contenu dans la trémie et le font tomber dans la fosse 1. Au moyen de la transmission 12, on peut régler à volonté le débit du produit passant entre les deux rouleaux 10 et 11.

La herse rotative 8 est placée à proximité des rouleaux 10 et 11. Par proximité, on entend une distance comprise entre 5 centimètres et 1 mètre. Dans l'exemple représenté, cette distance est de l'ordre de 30 cm. L'outil rotatif 8 ayant pour fonction d'incorporer la chaux vive en granulat tombant de l'organe épandeur 7 à la masse de déchets se trouvant dans la fosse, il importe que cette incorporation se fasse le plus rapidement possible avant que la réaction exothermique ne se soit développée. C'est la raison pour laquelle la distance séparant les moyens d'écoulement 10-11 de la chaux vive et l'outil 8 ne doit pas être trop grande. Elle doit être suffisamment grande pour permettre que les granulats soient correctement épandus et suffisamment faible pour que l'incorporation ait lieu immédiatement après l'épandage.

Comme cela est visible sur la figure 1, on peut avantageusement disposer une planche niveleuse 13 en avant de la herse 8 afin d'améliorer l'étalement du produit.

A titre préférentiel, mais non obligatoire, on peut atteler les roues arrière 6 au châssis 4 au moyen d'un bras 14 pivotant autour d'un axe horizontal 15 sous l'action d'un vérin 16 ; ce qui permet de régler la position en hauteur du châssis 4.

On peut également fixer la herse rotative 8 au-dessous du châssis 4 au moyen de supports 17 pivotant autour d'un axe 18 sous l'effet d'un vérin 19, ce qui permet de régler l'inclinaison de la herse 8.

Comme cela est visible sur la figure 2, le châssis 4 est attelé au moyen de traction par un timon 20. Ce timon 20 est monté de façon à pouvoir pivoter autour d'un axe 21 ; de sorte que le châssis 4 peut être remorqué soit par un engin qui enjambe la fosse 1 soit par un engin qui circule sur un chemin de roulement latéral, la surface latérale 2 étant alors conformée de façon à être suffisamment large.

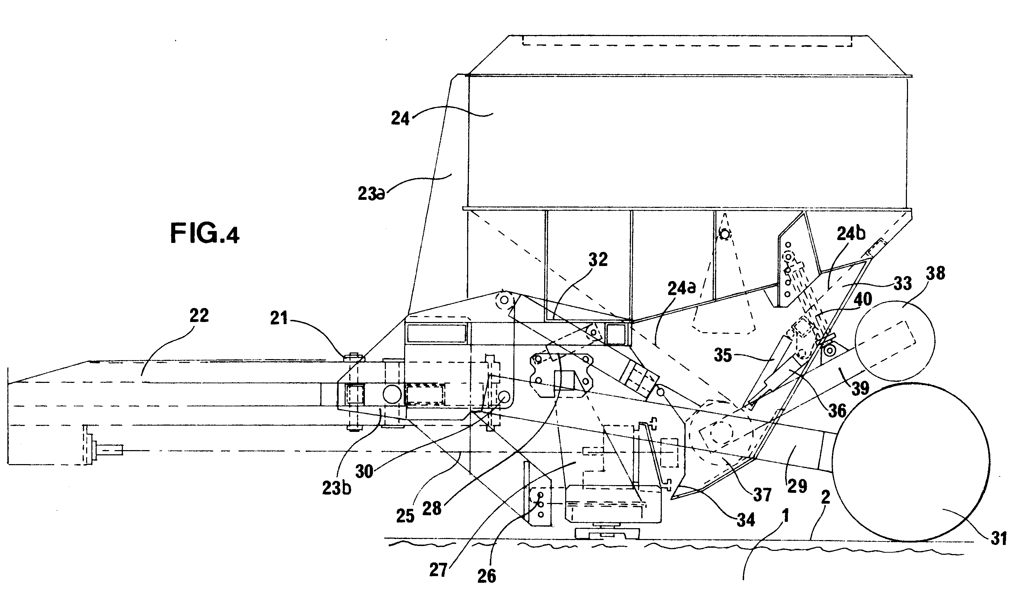

La figure 4 illustre un deuxième mode de réalisation de l'appareil décrit aux figures 1 et 2.

Cet appareil comporte un timon 22, analogue au timon 20 des figures 1 et 2 et qui, comme lui, est susceptible de pivoter autour d'un axe 21 de façon à pouvoir occuper trois positions une position dans l'axe et deux positions latérales. L'une ou l'autre des positions latérales permettent de remorquer l'appareil au moyen d'un tracteur ou analogue circulant sur le côté de la fosse 1 alors que l'appareil enjambe ladite fosse.

Le timon 22 est solidaire d'un châssis 23 qui est en deux parties 23a et 23b. La partie supérieure 23a du châssis porte une trémie 24. La partie inférieure 23b dudit châssis comporte deux bras 25 destinés à remplir le même rôle que les bras inférieurs d'attelage aux moyens desquels les outils agricoles sont attelés à des tracteurs munis d'un attelage trois points. Ces deux bras 25 sont fixes par rapport au châssis 23. Ils comportent à leur extrémité inférieure un tourillon d'attelage 26.

L'outil de malaxage 27 est analogue à l'outil 8 des figures 1 et 2. C'est de préférence une herse rotative identique à celles employées en agriculture pour la préparation du sol. Cette herse rotative 27 comporte, de façon connue, trois points d'attelage. Les deux points inférieurs sont attelés aux tourillons 26. Le point supérieur d'attelage 28 est relié au châssis 23 (et plus particulièrement à l'arrière de la partie 23a) par un vérin 28 : ce vérin 28 permet de régler à volonté l'inclinaison de la herse rotative 27. Dans l'exemple représenté, la herse rotative est droite, ses dents étant verticales, mais au moyen du vérin 28 on peut l'incliner soit vers l'avant soit vers l'arrière.

La partie 23b du châssis 23 porte également deux bras 29, montés à pivotement chacun par un axe 30 audit châssis 23. A l'extrémité de chaque bras 29 est disposée une roue 31 ; un vérin 32 permet de relever ou d'abaisser à volonté le bras 29.

A la partie inférieure de la trémie 24 est adaptée une goulotte 33. L'extrémité inférieure de la goulotte 33 est munie d'une ouverture 34 qui s'étend sur toute la largeur de la trémie 24.

De préférence, la trémie 24 à la même largeur que celle de la herse rotative 27 laquelle est sensiblement égale (et légèrement inférieure) à celle de la fosse 1.

La goulotte 33 coiffe la partie inférieure de la trémie qui comporte deux parois inclinées 24a et 24b. L'une de ces deux parois inclinées comporte une ouverture fermée par une trappe mobile 35 commandée par un vérin 36.

En dessous de la trappe 35 et à l'intérieur de la goulotte 33 est disposé un organe de distribution rotatif 37.

Cet organe de distribution 37 peut être entraîné en rotation par tout moyen approprié tel qu'un moteur. Il peut aussi être entraîné par l'arbre de prise de force du tracteur (non représenté).

Il peut également, comme cela est représenté à la figure 4, être entraîné au moyen d'un galet 38, porté par un bras 39 de façon à se trouver en contact avec la périphérie de la roue 31. Un système de transmission à courroie ou a chaîne est disposé à l'intérieur du bras 39 de façon que, lorsque le galet 38 est entraîné à rotation par la roue 31 avec laquelle il est en contact, il entraîne en rotation le distributeur rotatif 37.

De préférence, le galet 38 est maintenu fermement en contact avec la roue 31 par l'action d'un ressort 40 appuyant sur le bras 39.

Dans l'exemple représenté, l'orifice 34 de la goulotte 33 est situé juste à l'arrière de la herse rotative 27.

Les deux roues 31 situées de part et d'autre de la machine roulent sur les surfaces de roulement 2 de sorte que la machine enjambe la fosse 1. Les deux bras 29 permettent de régler la hauteur de travail des dents de la herse rotative 27 et permettent également de soulever toute la machine pendant son transport.

Sur l'exemple représenté à la figure 4, la herse 27 ne comporte pas de planche niveleuse telle que la planche 13 de l'outil 8 (figures 1 et 2) mais il est possible d'en disposer une.

Les figures 3a à 3d illustrent quatre modes de réalisation de la fosse 1 et de ses accotements 2.

La figure 3a illustre le mode de réalisation le plus simple, les figures 3b et 3c illustrent la disposition de un ou deux parapets 2a qui séparent les chemins de roulement 2 de la fosse 1 de façon à servir de guidage pour les véhicules. Sur la figure 3d, on voit que l'aire d'épandage est constituée par une simple dalle plane comportant deux parapets parallèles 2a, l'espace compris entre ces deux parapets constituant la fosse 1. Comme représenté, l'un des parapets 2a peut être constitué par un longeron amovible en bois ou autre matériau.

Pour mettre en oeuvre le procédé objet du brevet EP 0 306 430, on dispose le produit à traiter, des déchets d'élevage de volailles par exemple, dans la fosse 1 et on fait circuler au-dessus de cette fosse le châssis 4 de façon à épandre les granulats et les incorporer immédiatement au produit à traiter.

L'engin qui tire l'outil combiné 3 peut être un tracteur qui enjambe la fosse 1 ou un tracteur qui circule sur un des côtés de la fosse 1.

## Revendications

1. Dispositif pour l'incorporation de chaux vive dans une masse de produits hydrocarbonés, caractérisé par le fait qu'il comporte d'une part une fosse rectangulaire (1) dans laquelle est déposée la masse de produit hydrocarboné à traiter et d'autre part par un outil mobile (3), circulant au-dessus de ladite fosse, ledit outil étant constitué par la combinaison d'un outil rotatif (8-27) et d'un outil de distribution (10, 11-37).

2. Dispositif selon la revendication 1, dans lequel l'outil de distribution (10-11) est disposé en avant et à proximité immédiate de l'outil rotatif (8).

3. Dispositif selon la revendication 1, dans lequel l'outil de distribution (37) est disposé immédiatement à l'arrière de l'outil rotatif (27).

4. Dispositif selon la revendication 1, dans lequel l'outil de distribution comporte une trémie (7-24), destinée à contenir le granulat de chaux vive, munie à sa base d'une ouverture (9-34) s'étendant sur une largeur sensiblement égale à celle de la fosse (1).

5. Dispositif selon la revendication 4, dans lequel l'ouverture (9) de la trémie est obturée par un organe distributeur.

6. Dispositif selon la revendication 4, dans lequel l'organe distributeur est constitué par deux rouleaux contrarotatifs entraînés par l'intermédiaire d'une transmission (12) permettant d'en régler la vitesse.

7. Dispositif selon la revendication 4, dans lequel la partie inférieure de la trémie (24) est coiffée par une goulotte (33) comportant un organe de distribution (37) au-dessous duquel est disposée une ouverture (34) s'étendant sur une largeur sensiblement égale à celle de la machine.

8. Dispositif selon l'une quelconque des revendications précédentes, dans lequel une planche niveleuse (13) est disposée entre l'organe d'épandage et l'outil rotatif (8-27).

9. Dispositif selon l'une quelconque des revendications précédentes, dans lequel l'outil rotatif (8-27) est une herse rotative.

10. Dispositif selon l'une quelconque des revendications précédentes, dans lequel la fosse (1) est munie sur au moins un de ses grands côtés d'un chemin de roulement (2).

11. Dispositif selon la revendication 10, caractérisé par le fait que la fosse et le chemin de roulement sont séparés par un parapet (2a).

12. Dispositif selon la revendication 11, dans lequel la fosse (1) est constituée par une dalle plate munie de deux parapets (2a).

13. Dispositif selon la revendication 12, dans lequel au moins un des parapets (2a) est amovible.
